# EUROPEAN PATENT SPECIFICATION

(11) **EP 1 837 270 B1**
(45) Date of publication and mention of the grant of the patent: **11.04.2012**
(21) Application number: 06020945.9
(22) Date of filing: 05.10.2006
(51) Int. Cl.: B62J 1/00

(54) **Bicycle saddle assembly**
Fahrradsattelanordnung
Ensemble selle de bicyclette

(30) Priority: 20.03.2006 CN 200620008348 U; 28.08.2006 CN 200610111789
(43) Date of publication of application: 26.09.2007
(73) Proprietor: Chen, Jia-Pin, Taichung County 437 (TW); Chao, Kuo-Chin, Taichung County 437 (TW)
(72) Inventor: Chen, Jia-Pin, Taichung County 437 (TW); Chao, Kuo-Chin, Taichung County 437 (TW)
(74) Representative: Becker Kurig Straus

(56) References cited:
- EP-A- 1 307 382
- EP-A- 1 394 025
- EP-A- 1 837 271
- WO-A-98/25810
- CN-Y- 2 297 364
- US-A- 556 250

## Description

### BACKGROUND OF THE INVENTION

### 1. Field of the Invention

The present invention relates generally to bicycle saddles and more particularly to a bicycle saddle assembly that includes a saddle body having an opening space to arrange the rider's genital area and thereby at once reduces the pressure placed thereon and dissipates heat generated therein.

### 2. Description of the Related Art

Conventional bicycle seats or saddles are typically horizontal in profile with a narrow front end portion and a wider rear portion. The narrow front end portion creates a pressure zone on the perineal areas of the rider, which may adversely affect blood vessels and nerves and cause distress or injury to surrounding anatomical organs and tissues.

To try to avoid the drawbacks described above, U.S. Pat. No. 6,106,059 discloses a bicycle saddle having a front which broadens towards a rear that has a notched groove. In practical using, we can find that such a design can only relieve part of pressure placed on the perineal areas of the rider. Therefore, it is desirable to have a saddle with a construction that all of pressure placed on the perineal areas of the rider can be relieved.

EP 1 507 382, which is considered as the closest prior art, discloses a bicycle saddle assembly according to the preamble of claim 1.

### SUMMARY OF THE INVENTION

It is the primary objective of the present invention to provide a bicycle saddle assembly with an opening space which can fully relieve pressure placed on the rider's perineal areas.

It is a further objective of the present invention to provide a bicycle saddle assembly with ventilation function for dissipating heat generated in the rider's perineal areas as riding.

In carrying out the foregoing objectives, a bicycle saddle assembly in accordance with the present invention comprises a saddle body including a wider posterior portion for supporting bicycle rider's buttocks and a narrow anterior portion which fits between bicycle rider's crotch. The saddle body further includes a concave portion provided between the wider posterior portion and the narrow anterior portion. The saddle body has a highest area located on the wider posterior portion and a lowest area located on the concave portion so that an opening space with a sufficient depth is defined above the concave portion. Whereby, as riding, bicycle riders can arrange his perineal areas comfortably on the saddle body to relieve pressure placed thereon and dissipate heat generated therein.

The saddle body has a mounting portion being U-shaped in transverse cross section and extending downwardly from the underneath side of the saddle body. The bicycle saddle assembly in accordance with the present invention further comprises a mounting means to cooperate with the mounting portion of the saddle body so that the saddle body can be easily mounted on a seat post of a bicycle.

In a further preferred embodiment of the present invention, the mounting means may include an upper device and a under device. The mounting portion of the saddle body defines an end part to cooperate with the upper device and the under device to mount the saddle body on a seat post of a bicycle.

### BRIEF DESCRIPTION OF THE DRAWINGS

The present invention may be more clearly understood with reference to the following detailed description, in conjunction with the appended drawings of which:
FIG. 1 is a perspective view of a first preferred embodiment according to the present invention more clearly showing the saddle assembly mounting on a seat post of a bicycle;
FIG. 2 is an exploded view of the embodiment shown in FIG. 1;
FIG. 3 is a top view of the embodiment shown in FIG. 1;
FIG. 4 is a side view of the embodiment shown in FIG. 1;
FIG. 5 is a top view of a saddle body of the embodiment shown in FIG. 1;
FIG. 6 is a cross-sectional view taken along the line 6-6 of FIG. 5;
FIG. 7 is a cross-sectional view taken along the line 7-7 of FIG. 6;
FIG. 8 is a cross-sectional view taken along the line 8-8 of FIG. 6;
FIG. 9 is a side view of the saddle body of the embodiment shown in FIG. 1 move clearly showing the ways of positioning the genital area in the case of a male rider;
FIG. 10 is a side view of a saddle body of a second preferred embodiment according to the present invention;
FIG. 11 is a cross-sectional view taken along the line 1-11 of FIG. 3;
FIG. 12 is a cross-sectional view taken along the line 12-12 of FIG. 4;
FIG. 13 is an exploded view of a third preferred embodiment according to the present invention; and
FIG. 14 is an exploded view of a fourth preferred embodiment according to the present invention.

### DETAILED DESCRIPTION OF THE INVENTION

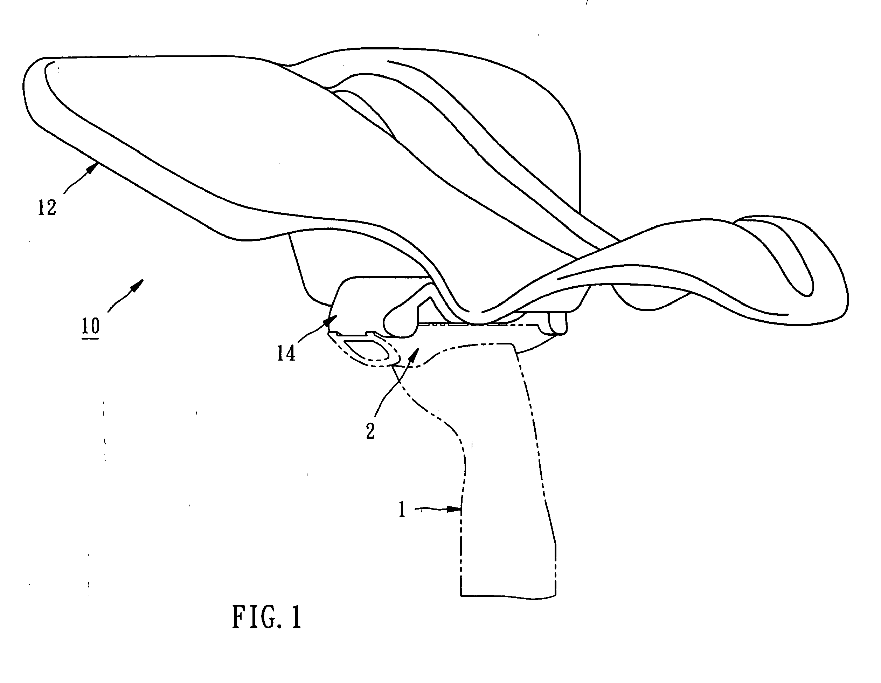

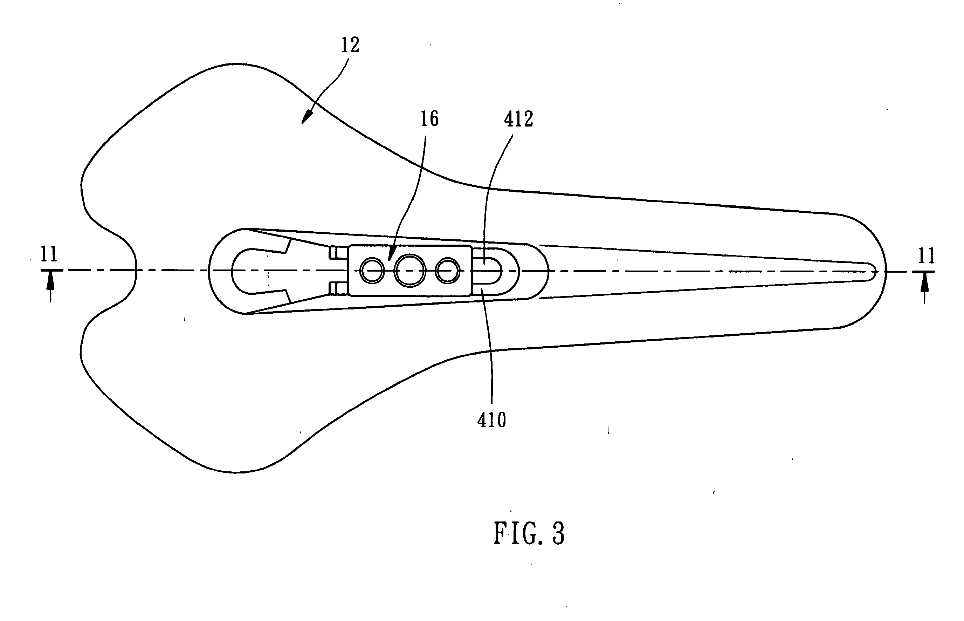

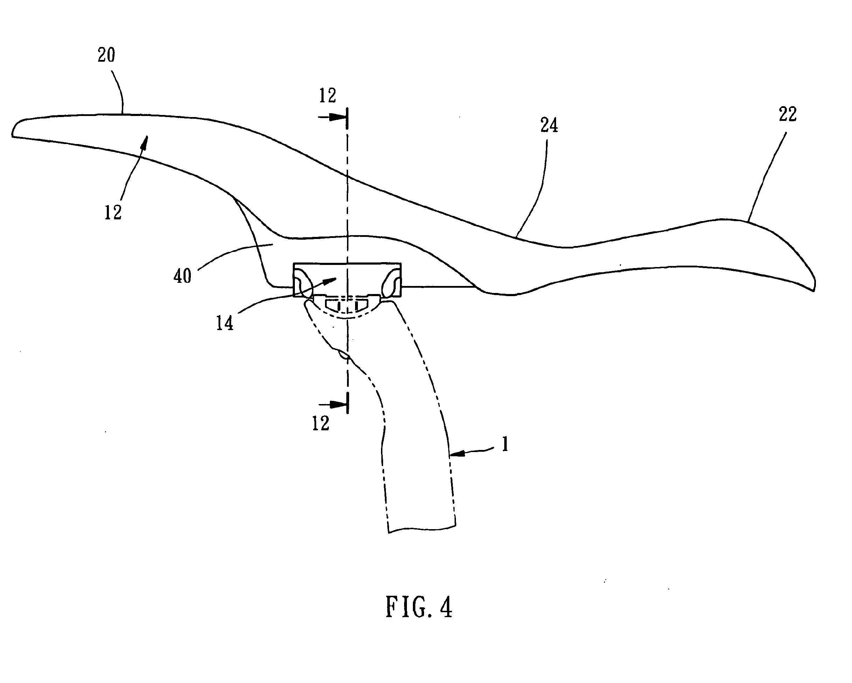

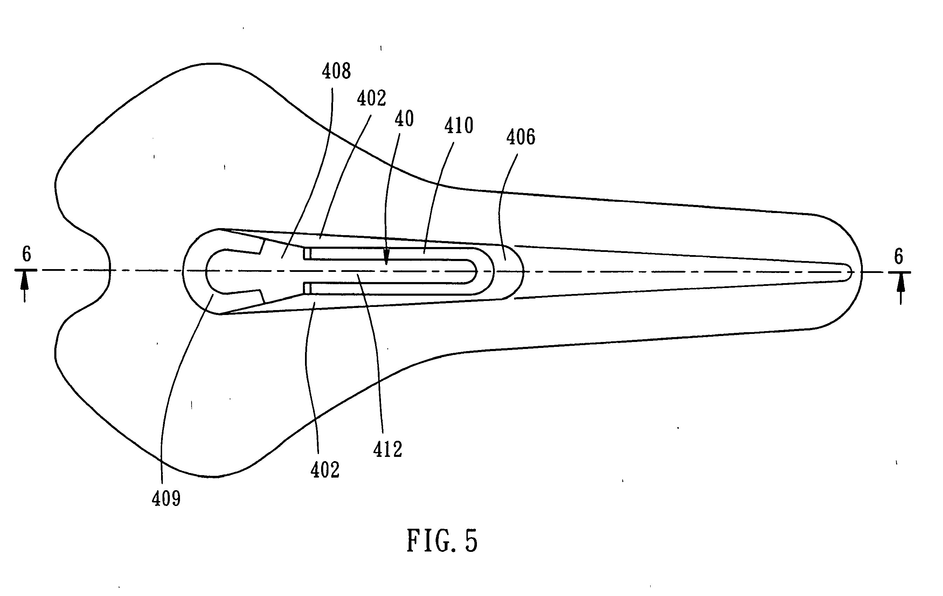

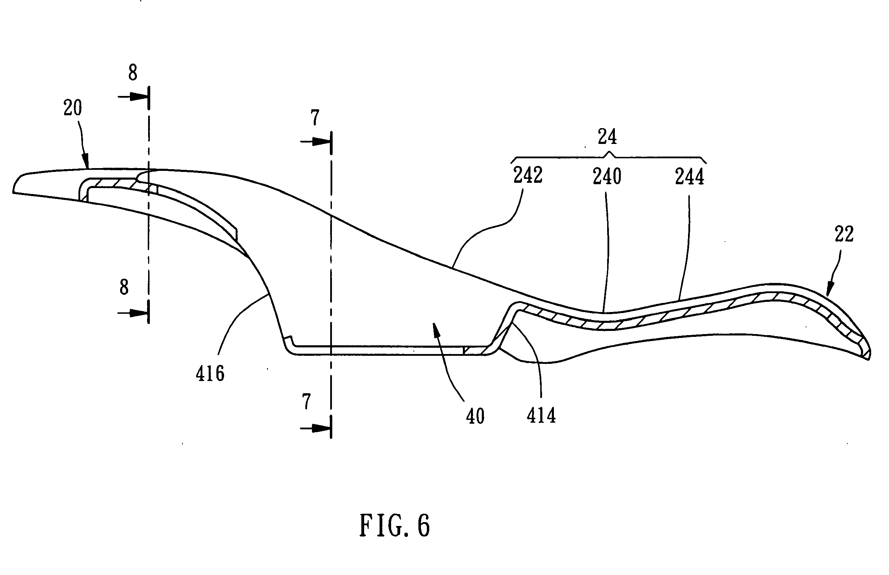

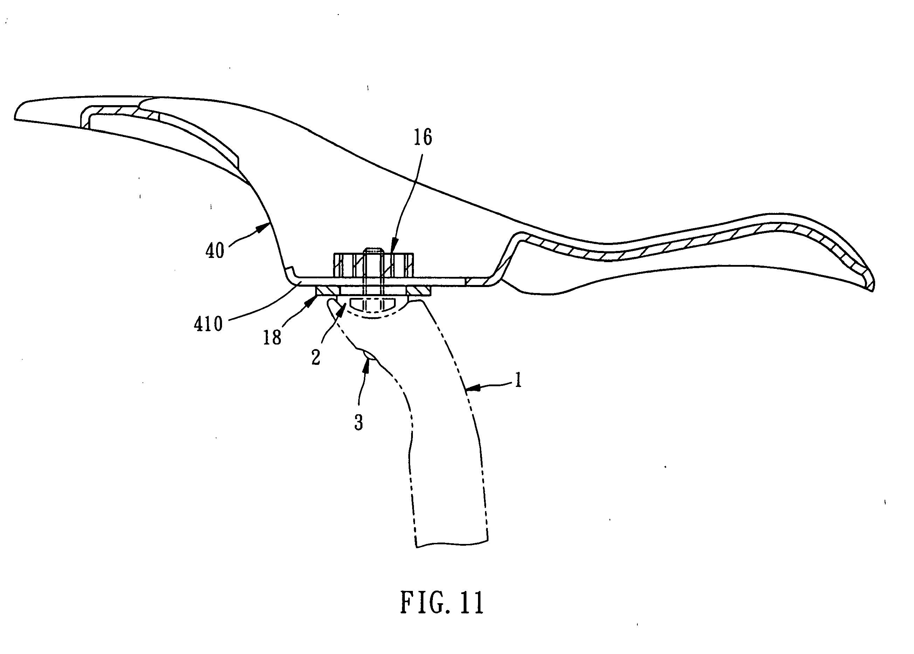

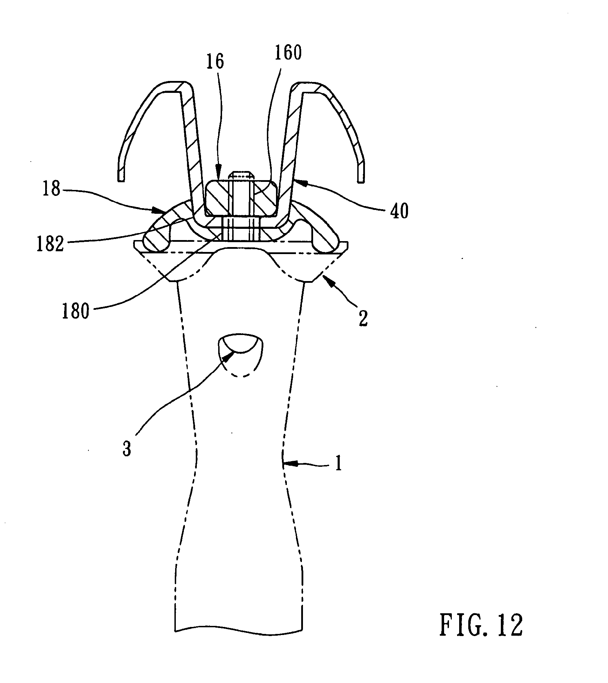

Referring now to FIGS. 1-12, there can be seen bicycle saddle assembly 10 embodying the present invention. Bicycle saddle assembly 10 includes a saddle body 12 and a mounting means14 to mount saddle body 12 on a seat post 1 of a bicycle. Saddle body 12 has a wider posterior portion 20 for supporting bicycle rider's buttocks, a narrow anterior portion 22 which fits between bicycle rider's crotch and a concave portion 24 located between wider posterior portion 20 and narrow anterior portion 22.

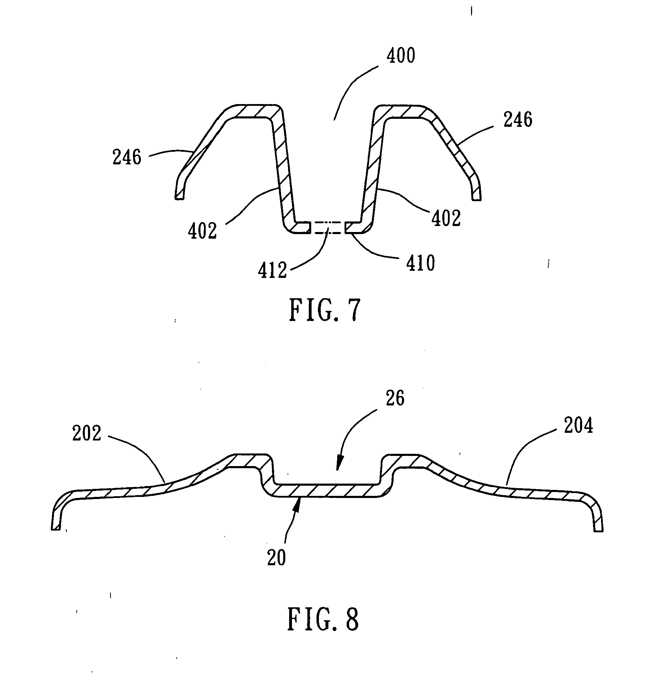

Wider posterior portion 20 is a supporting plate with a pair of depressed upper surface 202, 204 respectively provided on either side of the center axis of the saddle body 12 so that the rider's buttocks can closely rest on wider posterior portion 20 (as shown in FIG. 8).

Concave portion 24 has a base 240, a first slope section 242 extending upwardly from base 240 to one end of wider posterior portion 20, and a second slop section 244 extending upwardly from base 240 to one end of narrow anterior portion 22. In this embodiment, first slop section 242 is longer than second slop section 244 so that base 240 can be located near narrow anterior portion 22. Particularly, concave portion 24 has a pair of downwardly extending and symmetrically distributed sides 246, so that the rider's crotch can be comfortably fitted thereto (as shown in FIG. 7).

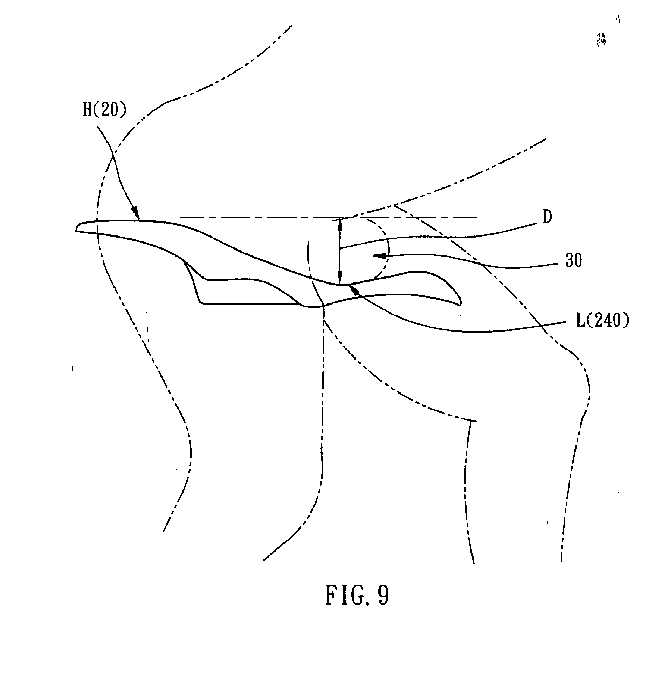

Saddle body 12 has a highest area H positioned on wider posterior portion 20 and a lowest area L positioned on base 240. The difference D between highest area H and lowest area L varies from 30 mm to 60mm so as to form an arc-shaped opening space 30 with a sufficient depth above concave portion 24 to arrange rider's genitals (as shown in FIG. 9). In this embodiment, the upper side of saddle body 12 provides a ventilation channel 26 extending along the center axis thereof.

Extending downwardly from the underneath side of saddle body 12 is a mounting portion 40. Mounting portion 40 has an rectangle upper opening 400, two side walls 402 extending respectively and downwardly from each long side of upper opening 400, a front wall 406, a rear opening 408, a rear reinforced edge 409 and a bottom wall 410 with a long cut 412. In this embodiment, bottom wall 410 is horizontally provided so that each side wall 402 has a short front side 414 and a long rear side 416.

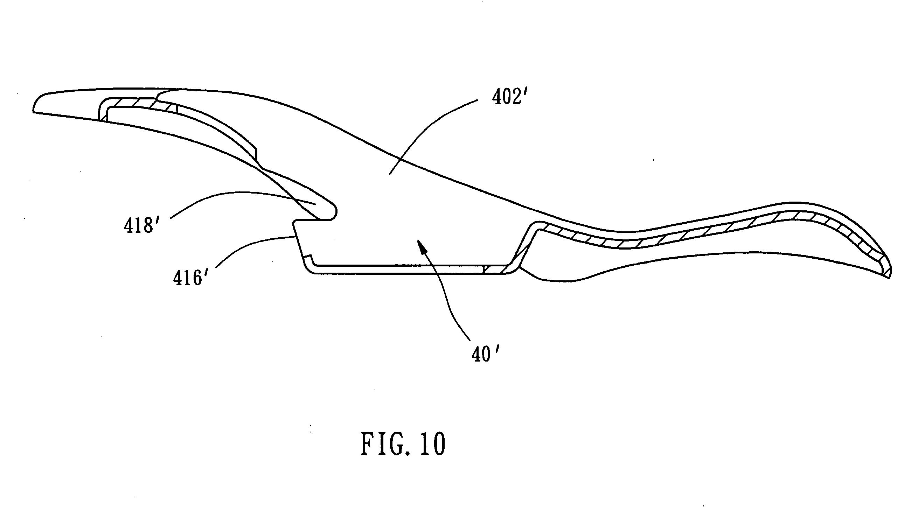

Please referring to FIG. 10, in another embodiment, long rear side 416' of each side wall 402' of mounting portion 40' has a cove 418' so that each side wall 402' will function as a buffer to absorb the shocks as riding.

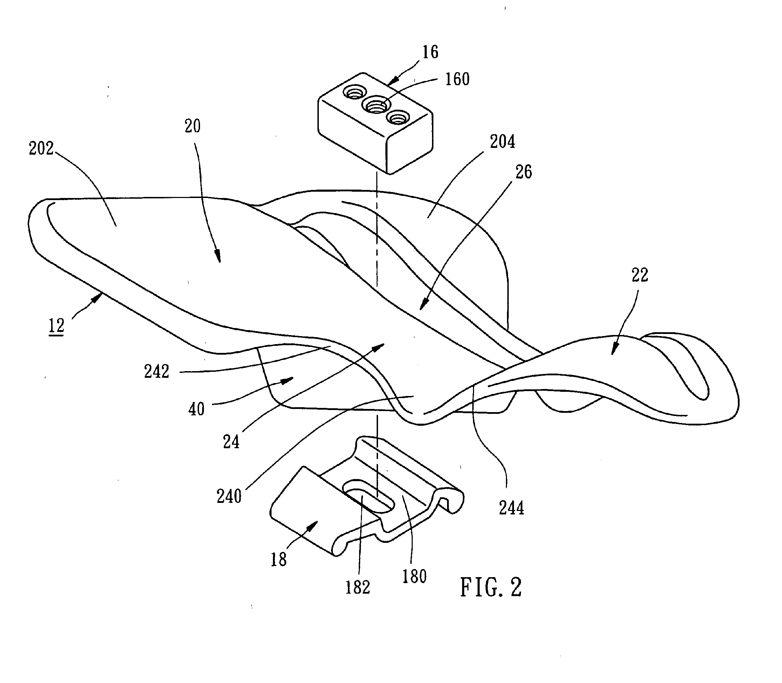

Mounting means 14 is designed to cooperate with mounting portion 40 of saddle body 12 so that saddle body 12 can be easily mounted on seat post 1 of a bicycle. Mounting means 14 includes an upper device 16 with at least a threaded hole 160 and an under device 18 with a center groove 180 and a long hole 182 (as shown in FIG. 2).

In mounting, upper device 16 is placed into the inside of mounting portion 40 from upper opening 400 and against the upper surface of bottom wall 410. Under device 18 is placed under the lower surface of bottom wall 410 in such a way that the end part of mounting portion 40 can be received in center groove 180 of under device 18. In this embodiment, a prior art connecting device 2 is placed on the top end of seat post 1 to cooperate with under device 18 so that a bolt 3 can be inserted through a hole provided on seat post 1, long hole 182 of under device 18 and screwed into threaded hole 160 of upper device 16 to mount saddle body 12 on seat post 1.

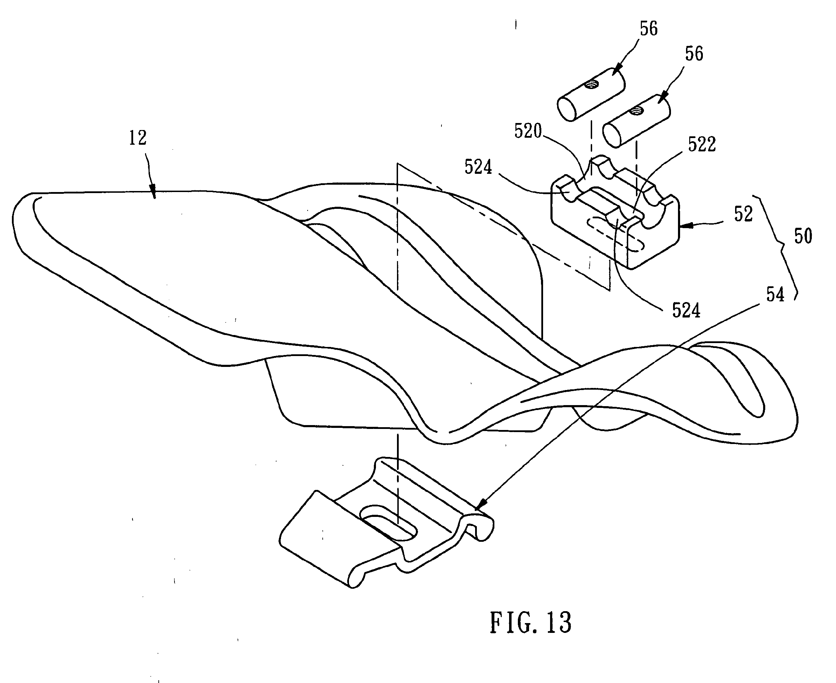

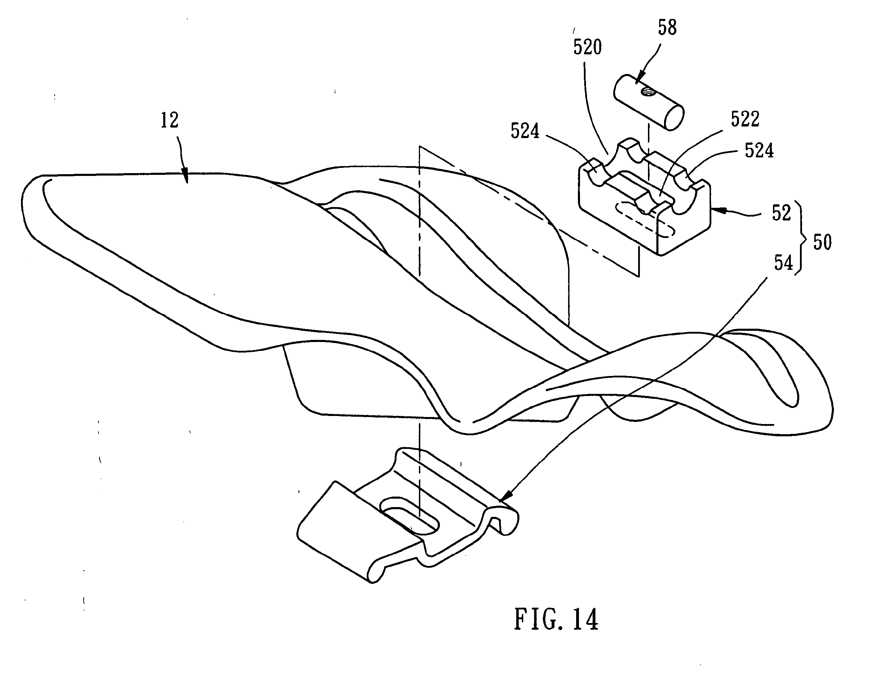

Referring further to FIGS. 13 and 14, in another embodiment, a mounting means 50 has an upper device 52 and an under device 54. Upper device 52 is designed to have a lengthwise trench 520, a long hole 522 and two crosswise trenches 524. Under device 54 is the same as mounting means 14. In mounting, two short nuts 56 are used to be respectively received in each crosswise trench 524 and screwed into by a bolt. Alternatively, in a further embodiment, a long nut 58 is used to be received in lengthwise trench 520 and screwed into by a bolt.

## Claims

1. A bicycle saddle assembly (10), comprising:
a saddle body (12) including a wider posterior portion (20) for supporting bicycle rider's buttocks and a narrow anterior portion (22) which fits between bicycle rider's crotch;
said saddle body (12) further including a concave portion (24) provided between said wider posterior portion (20) and said narrow anterior portion (22), a highest area (H) located on said wider posterior portion (20) and a lowest area (L) located on said concave portion (24) to define an opening space (30) with a sufficient depth above said concave portion (24);
whereby the bicycle rider can arrange his genitals comfortably on said saddle body, wherein said saddle body has a mounting portion (40, 40') being U-shaped in transverse cross section and extending downwardly from the underneath side thereof, **characterized in that** said mounting portion (40, 40') includes an upper opening (400) with two long side formed on the upper side of said saddle body (12), two side walls (402, 402') extending downwardly from each said long side, and a bottom wall (410), wherein the bottom wall (410) is horizontally provided so that each side wall (402, 402') has a short front side (414) and a long rear side (416, 416'), wherein a difference (D) between said highest area (H) and said lowest area (L) varies from 30 to 60 mm, wherein said difference (D) is taken substantially normal to a plane defined by the bottom wall (410).

2. The bicycle saddle assembly (10) as claimed in claim 1, wherein the long rear side (416') of each side wall (402') of the mounting portion (40') has a cove (418') so that each side wall (402') will function as a buffer to absorb the shocks as riding.

3. The bicycle saddle assembly (10) as claimed in claim 1, wherein said mounting portion (40) further includes a rear opening (408) with a rear reinforced edge (409).

4. The bicycle saddle assembly (10) as claimed in claim 1, further comprising a mounting means (14, 50) to cooperate with said mounting portion (40) of said saddle body (12) so that said saddle body (12) can be easily mounted on a seat post (1) of a bicycle.

5. The bicycle saddle assembly (10) as claimed in claim 6, wherein said mounting means (14, 50) includes an upper device (16, 52) and a under device (18, 54), said mounting portion (40) of said saddle body (12) has an end part to cooperate with said upper device (16, 52) and said under device (18, 54) to mount said saddle body (12) on a seat post (1) of a bicycle.

6. The bicycle saddle assembly (10) as claimed in claim 7, wherein said upper device (16) has at least a threaded hole (160), said under device (18) has a center groove (180) and a long hole (182).

7. The bicycle saddle assembly (10) as claimed in claim 7, wherein said upper device (52) has a lengthwise trench (520) and a long hole (522), said under device (54) has a center groove and a long hole, said mounting means (50) further includes a long nut (58) received in said lengthwise trench (520) to be screwed into by a bolt.

8. The bicycle saddle assembly (10) as claimed in claim 7, wherein said upper device (52) has a long hole (522) and two crosswise trenches (524), said under device (54) has a center groove and a long hole, said mounting means (50) further includes two short nuts (56) received in said crosswise trenches (524) to be screwed into by a bolt.

## Patentansprüche

1. Fahrradsattel-Aufbau (10), umfassend:
einen Sattelkörper (12), der einen breiteren hinteren Bereich (20) aufweist, um das Gesäß des Fahrradfahrers zu tragen, und einen schmaleren vorderen Bereich (22), der zwischen den Schritt des Fahrradfahrers passt;
worin der Sattelkörper (12) weiter einen konkaven Bereich (24) umfasst, der zwischen dem breiteren hinteren Bereich (20) und dem schmaleren vorderen Bereich (22) bereit gestellt ist, einen erhobenen Bereich (H), der auf dem weiteren hinteren Bereich (20) angeordnet ist und einem tief-liegenden Bereich (L), der auf dem konkaven Bereich (24) angeordnet ist, um einen offenen Bereich (30) mit ausreichender Tiefe über dem konkaven Bereich (24) zu definieren;
wobei der Fahrradfahrer seine Genitalien bequem auf dem Sattelkörper ausrichten kann, worin der Sattelkörper einen im transversalen Querschnitt U-förmigen Befestigungsbereich (40, 40') aufweist, der sich von einer Unterseite davon nach unten erstreckt, **dadurch gekennzeichnet, dass** der Befestigungsbereich (40, 40') eine obere Öffnung (400) mit zwei langen Seiten aufweist, die an der Oberseite des Sattelkörpers (12) ausgebildet sind, zwei Seitenwandungen (402, 402')), die sich von jeder langen Seite nach unten erstrecken, und eine Bodenwand (410), worin die Bodenwand (419) horizontal bereit gestellt ist, so dass jede Seitenwand (402, 402') ein kurze Vorderseite (414) und eine lange Rückseite (416, 416') aufweist, wobei ein Unterschied zwischen dem erhöhten Bereich (H) und die tief-liegenden Bereich (L) von 30 bis 60 mm variiert, wobei der Unterschied (D) im Wesentlichen normal zu einer Ebene genommen wird, die durch die Bodenwand (410) definiert wird.

2. Fahrradsattel-Aufbau (10) nach Anspruch 1, worin die lange Rückseite (416') jeder Seitenwand (402') des Befestigungsbereichs (40') eine Einbuchtung (418') aufweist, so dass die Seitenwand (492') als Puffer dient, die Stöße beim Fahren zu absorbieren.

3. Fahrradsattel-Aufbau (10) nach Anspruch 1, worin der Befestigungsbereich (40) weiter einr rückseitige Öffnung (408) mit einer rückseitig verstärkten Rand (409) aufweist.

4. Fahrradsattel-Aufbau (10) nach Anspruch 1, welcher weiter Befestigungsmittel (14, 50) aufweist, die mit dem Befestigungsbereich (40) des Sattelkörpers (12) zusammenwirken, so dass der Sattelkörper (12) einfach auf dem Sitzpfosten (1) eines Fahrrads befestigt werden kann.

5. Fahrradsattel-Aufbau (10) nach Anspruch 4, worin die Befestigungsmittel (14, 50) eine obere Einrichtung (16, 52) und eine untere Einrichtung (18, 54) umfassen, wobei der Befestigungsbereich (40) des Sattelkörpers (12) einen Endbereich aufweist, der mit der oberen Einrichtung (16, 52) und der unteren Einrichtung (18, 54) zusammenwirkt, um den Sattelkörper (12) an einem Sitzpfosten (1) eines Fahrrads zu befestigen.

6. Fahrradsattel-Aufbau (10) nach Anspruch 5, worin die obere Einrichtung (16) mindestens ein mit einem Gewinde versehenes Loch (160) aufweist, worin die untere Einrichtung (18) eine zentrale Vertiefung (180) und ein Langloch (182) aufweist.

7. Fahrradsattel-Aufbau (10) nach Anspruch 5, worin die obere Einrichtung (52) einen längs verlaufenden Einschnitt (520) und ein Langloch (522) aufweist, worin die untere Einrichtung (54) eine zentrale Vertiefung und ein Langloch aufweist, worin die Befestigungsmittel (50) weiter eine längliche Nut (58) aufweist, die in dem längs-verlaufenden Einschnitt (520) aufgenommen wird, um mit einem Bolzen darin verschraubt zu werden.

8. Fahrradsattel-Aufbau (10) nach Anspruch 5, worin die obere Einrichtung (52) ein Langloch (522) und zwei quergerichtete Vertiefungen (524) aufweist, worin die untere Einrichtung (54) eine zentrale Vertiefung und ein Langloch aufweist, worin die Befestigungsmittel (50) weiter zwei kurze Nute (56) aufweisen, die in der quergerichteten Vertiefungen (524) aufgenommen werden, um mit einem Bolzen darin verschraubt zu werden.

## Revendications

1. Ensemble selle de bicyclette (10), comprenant :
un corps de selle (12) comportant une partie postérieure plus large (20) pour soutenir les fesses du cycliste et une partie antérieure étroite (22) qui s'ajuste dans l'entrejambe du cycliste;
ledit corps de selle (12) présentant en outre une partie concave (24) disposée entre ladite partie postérieure plus large (20) et ladite partie antérieure étroite (22), une zone surélevée (H) située sur ladite partie postérieure plus large (20) et une zone surbaissée (L) située sur ladite partie concave (24) pour définir un espace d'ouverture (30) d'une profondeur suffisante au-dessus de ladite partie concave (24);
permettant au cycliste de disposer ses parties génitales confortablement sur ledit corps de selle,
dans lequel ledit corps de selle présente une partie montage (40, 40') en forme de U en coupe transversale et s'étendant vers le bas en partant du côté inférieur de celle-ci, **caracterisé en ce que** ladite partie montage (40) comporte une ouverture supérieure (400) avec deux longs côtés formés sur le côté supérieur dudit corps de selle (12), deux parois latérales (402) s'étendant vers le bas à partir de chacun desdits longs côtés, et une paroi de fond (410), dans lequel la paroi de fond (410) est agencée horizontalement de sorte que chaque paroi latérale (402, 402') possède un petit côté avant (414) et un long côté arrière (416, 416'), dans lequel une différence (D) entre ladite zone surélevée (H) et ladite zone surbaissée (L) varie de 30 à 60 mm, dans lequel ladite différence (D) est mesurée substantiellement à la normale d'un plan défini par la paroi de fond (410).

2. Ensemble selle de bicyclette (10) selon la revendication 1, dans lequel le long côté arrière (416') de chaque paroi latérale (402') de la partie montage (40') présente une anse (418') de sorte que chaque paroi latérale (402') fera office d'amortisseur pour amortir les chocs pendant la conduite.

3. Ensemble selle de bicyclette (10) selon la revendication 1, dans lequel ladite partie montage comporte en outre une ouverture arrière (408) d'un bord renforcé arrière (409).

4. Ensemble selle de bicyclette (10) selon la revendication 1, comprenant en outre un moyen de montage (14, 50) pour coopérer avec ladite partie montage (40) dudit corps de selle (12) de sorte que ledit corps de selle (12) peut se monter facilement sur une tige de selle (1) de bicyclette.

5. Ensemble selle de bicyclette (10) selon la revendication 4, dans lequel ledit moyen de montage (14, 50) comporte un dispositif supérieur (16) et un dispositif inférieur (18), ladite partie montage dudit corps de selle (12) présentant une pièce d'extrémité pour coopérer avec ledit dispositif supérieur (16, 52) et ledit dispositif inférieur (18, 54) pour monter ledit corps de selle (12) sur une tige de selle (1) de bicyclette.

6. Ensemble selle de bicyclette (10) selon la revendication 5, dans lequel ledit dispositif supérieur (16) possède au moins un trou fileté (160), ledit dispositif inférieur (18) présentant une rainure centrale (180) et un long trou (182).

7. Ensemble selle de bicyclette (10) selon la revendication 5, dans lequel ledit dispositif supérieur (52) possède une tranchée longitudinale (520) et un long trou (522), ledit dispositif inférieur (54) présentant une rainure centrale et un long trou, ledit moyen de montage (50) comportant en outre un long écrou (58) logé dans ladite tranchée longitudinale (524) pour vissage à l'aide d'un boulon.

8. Ensemble selle de bicyclette (10) selon la revendication 5, dans lequel ledit dispositif supérieur (52) possède un long trou (522) et deux tranchées transversales (524), ledit dispositif inférieur (54) présentant une rainure centrale et un long trou, ledit moyen de montage (50) comportant en outre deux petits écrous (56) logés dans lesdites tranchées transversales (524) pour vissage à l'aide d'un boulon.
